(19) Europäisches Patentamt
European Patent Office
Office européen des brevets

(11) Publication number: **0 002 616**
**B1**

(12) **EUROPEAN PATENT SPECIFICATION**

(45) Date of publication of patent specification: **30.03.83**

(51) Int. Cl.³: **C 07 C 103/38,**
C 08 K 5/20, C 08 L 23/02

(21) Application number: **78300833.7**

(22) Date of filing: **15.12.78**

(54) **Oxamide derivatives, their use in stabilizing organic materials and stabilized organic materials containing the said oxamide derivatives.**

(30) Priority: **21.12.77 US 862787**
**21.12.77 US 862804**

(43) Date of publication of application:
**27.06.79 Bulletin 79/13**

(45) Publication of the grant of the patent:
**30.03.83 Bulletin 83/13**

(84) Designated Contracting States:
**BE CH DE FR GB NL SE**

(56) References cited:
**FR - A - 2 090 870**
**FR - A - 2 184 630**

(73) Proprietor: **UNIROYAL, INC.**
**Word Headquarters**
**Middlebury Connecticut 06749 (US)**

(72) Inventor: **Hirsch, Richard Henry**
**470 Belleview**
**Webster Groves Missouri (US)**
Inventor: **Selcer, William Henry**
**644 Scott Avenue**
**Kirkwood Missouri (US)**

(74) Representative: **Harrison, Michael Robert et al,**
**URQUHART-DYKES & LORD 11th Floor Tower**
**House Merrion Way**
**Leeds LS2 8PB (GB)**

**EP 0 002 616 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Oxamide derivatives, their use in stabilizing organic materials and stabilized organic materials containing the said oxamide derivatives

As is known, many compounds have been found useful as stabilizers of organic materials (e.g. polymers such as polyolefins) against oxidative deterioration. Prominent among such compounds (herein also called antioxidants) are certain bis(alkylhydroxyphenyl)alkanoyl compounds such as bis[(alkylhydroxyphenyl)alkanoyloxyalkyl]iminoalkanes in U.S. Patent 3,441,575 issued 29 April 1969 to M. Dexter et al., bis[(alkylhydroxyphenyl)alkanoylamido]alkanes in U.S. Patent 3,584,047 issued 8 June 1971 to M. Dexter et al., N,N'-bis[alkylhydroxyphenyl)alkanoyl] hydrazines in U.S. Patent 3,660,438 issued 2 May 1972 to M. Dexter and bis- and tris-[alkylhydroxyphenyl]alkanoyloxyalkyl] compounds having a heterocyclic nucleus containing an imidodicarbonyl group in U.S. Patents 3,763,093 issued 2 October 1973 to G. Kletecka et al. and 3,707,542 issued 26 December 1972 to D. H. Steinberg et al. In addition bis(3,5-di-*t*-butyl-4-hydroxyphenyloxamido)alkanes have been proposed as polyolefin antioxidants (French Patent Specification No. 2,090,870). Although some of those compounds are effective antioxidants, new methods utilizing other compounds which are more effective are very desirable.

It is also known that oxidative deterioration of many organic materials, e.g. polyolefins and particularly highly branched varieties thereof including polymers of propylene, is typically catalyzed (catalytically accelerated) in the presence of metal ions, e.g. ions of a heavy metal such as copper present in wire and cable commonly insulated with polyolefin or other organic materials, and that many compounds having good antioxidant properties in the absence of such metal ions are much less effective when such ions are present. Hence much attention has been paid to identification of compounds which inhibit such oxidation catalysis. In general and usually herein, such compounds are referred to as metal deactivators. Examples thereof are described in "Stabilization of Polypropylene" by R. H. Hansen et al., Poly. Eng. Sci. *5*, 223 (1965), "New Antioxidant/Metal Deactivator System for Polyolefins Used in Wire and Cable Applications" by A. DiBattista et al., Soc. Plast. Eng., Tech. Pap. *21*, 280 (1975) and articles cited therein. Representative of such compounds are oxamide, oxanilide and oxalic acid benzylidene dihydrazide (commonly called "OABH") which is among those most widely used commercially. Typically, however, the compounds most effective as metal deactivators are not highly effective in stabilizing organic materials against the oxidative deteroration that occurs in the absence of metal ions.

Ideally, for stabilization of organic materials in the presence of metal ions, a compound would be "bifunctional", i.e. effective as both antioxidant and metal deactivator. See "Synthesis and Evaluation of New Stabilizers for Polyethylene Insulation" by R. L. Hartless et al., Amer. Chem. Soc., Div. of Org. Coatings and Plastics Chem., Preprints *34*, No. 2 (Sept. 1974) which suggests such use of several compounds including the condensation product of 3,5-di-tert-butyl-4-hydroxybenzaldehyde with oxalyl dihydrazide, i.e., OABH having 4-hydroxy and 3,5-di-tert-butyl substituents on each phenyl ring.

Unfortunately, that compound suggested by Hartless et al. isn't notably effective, and extensive efforts to provide a more effective bifunctional compound by altering substituents on compounds of that general type have been generally disappointing. As observed in the article by Hartless et al., "It would be interesting to speculate on the chemical effect of substituent alterations but unequivocal conclusions are precluded for several reasons. Physical differences (solubility, diffusion rates, particle sizes, etc.) between the compounds may be more important than chemical differences".

Accordingly, new compounds which are advantageously effective as stabilizers of organic materials against oxidative deterioration are very desirable, and it is also very desirable to provide new compounds which are highly advantageous in deactivation of metal ions which catalyze the oxidative deterioration of such materials. In particular, it is very desirable to provide new compounds which are advantageously useful both for deactivation of metal ions to inhibit such catalysis and for stabilization of organic materials against oxidative deterioration which occurs in the absence of such metal ions. In view of the wide-spread use of polymers such as various polyolefins in environments conducive to oxidative deterioration, new compounds which are specifically advantageous for any or all of those purposes in such polymers are especially desirable. Accordingly, it is an object of this invention to provide such compounds. Other objects will be apparent from the following in which percentages are by weight and temperatures are Centigrade except where otherwise noted.

Summary of the invention

In accordance with the present invention, the afore-mentioned advantages are provided by new compounds having the structural formula

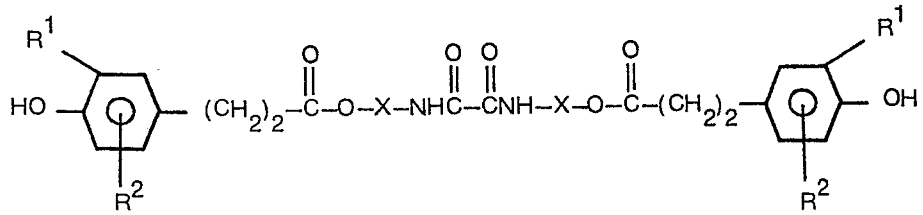

in which each $R^1$ is independently tertiary alkyl having up to 8 carbon atoms with the tertiary carbon atom directly linked to the phenolic ring on which that $R^1$ is a substituent, each $R^2$ is independently H or alkyl having up to 8 carbon atoms, and each X is independently a divalent hydrocarbon radical containing up to 12 carbon atoms and having from 1 to 10 carbon atoms forming the shortest chain linking the adjacent

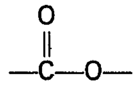 and 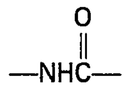

radicals in said compound.

This invention also relates to a method for stabilizing organic material against oxidative deterioration by incorporating a stabilizing amount of a compound of the above formula in an organic material normally subject to said deterioration and to compositions comprising said organic materials and a stabilizing amount of said compound. Organic materials, especially polyolefins, particularly polyethylene and copolymers of propylene and ethylene, can be stabilized in accordance with this invention.

Description of preferred embodiments

As used herein, polyolefin means a polymer of olefinically (most commonly $\alpha$-olefinically) unsaturated monomers which can be unsubstituted and/or substituted olefinic hydrocarbons. Also as used herein, copolymer of propylene and ethylene means a copolymer of monomers consisting essentially of propylene and ethylene (at least 0.5% and usually between about 1% and about 15% ethylene) such as, e.g. random propylene/ethylene copolymers containing from about 1% to about 3% ethylene and block propylene/ethylene copolymers containing from about 5% to about 15% ethylene.

In the foregoing formula each $R^1$, by including a tertiary carbon atom linked directly (i.e. through no other atom(s)) to the phenolic ring on which that $R^1$ is a substituent, is tertiary alkyl (e.g. t-butyl, t-amyl or t-octyl). Preferably, $R^1$ is t-butyl. Although $R^2$ may be H or alkyl having from 1 to about 8 carbon atoms, it is also desirably alkyl defined as $R^1$ herein, preferably t-butyl, and is also preferably situated ortho to the hydroxy radical on the phenolic ring on which that $R^2$ is a substituent. Each X in the foregoing formula is a divalent radical consisting of hydrogen and from 1 to about 12 carbon atoms. From 1 to about 10 (typically not more than about 6) of those carbon atoms are the linking atoms in the shortest chain (the chain containing the least number of carbon atoms) between the

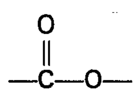 and 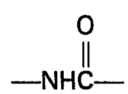

radicals adjacent that X in the formula. Thus, that chain may be all or part of the carbon skeleton of an aliphatic radical, e.g. an acyclic alkylene ($C_nH_{2n}$) radical, a non-major portion of a cyclic hydrocarbon radical (e.g. 2 or 3 consecutive carbon atoms in a phenylene or cyclohexylene ring) or a combination thereof. Preferably X contains no olefinic unsaturation, and said chain contains preferably at least 2 carbon atoms and preferably not more than about 5 carbon atoms. Also preferably, each X contains not more than about 6 carbon atoms and thus can be desirably selected from phenylene and alkylene (cyclic or acyclic) containing up to about 6 carbon atoms.

For uses of the compounds of this invention in stabilization of organic materials in the presence of metal ions which catalyze the oxidative deterioration of such materials, and particularly for stabilization of polyolefins such as polyethylene and propylene/ethylene copolymers in the presence of such ions, each X is advantageously not highly branched or otherwise sterically prominent in more than one direction. Thus when X is aliphatic, it preferably contains not more than about 1 carbon atom more than the number of carbon atoms in said shortest linking chain. Also for such uses when X is aliphatic it is preferably a non-tertiary (devoid of tertiary carbon atoms) radical and, even more desirably, such a radical containing 2 or 3 carbon atoms, i.e. n-propylene, isopropylene or, most advantageously for many uses, ethylene. Similarly, when X contains a phenylene radical, it is preferably meta-phenylene or, most advantageously for many uses, ortho-phenylene.

The compound represented by the foregoing formula when each $R^1$ is tertiary butyl, each $R^2$ is tertiary butyl ortho to the hydroxy radical on the phenolic ring on which that $R^2$ is a substituent, and each X is ethylene, is herein designated N,N′ - bis[2 - [3 - (3,5 - di - t - butyl - 4 - hydroxyphenyl)-propionyloxy]ethyl]oxamide (hereinafter BPEO). That compound can be prepared by reacting a lower alkyl (e.g. methyl, ethyl or n-butyl) ester of 3 - (3,5 - di - t - butyl - 4 - hydroxyphenyl)propionic acid with 1/2 of an equimolar amount of N,N′ - bis(2 - hydroxyethyl)oxamide. Preferably the reaction is carried out at a temperature between about 25° and about 250°, and in the presence of a suitable transesterification catalyst such as, e.g. stannous oxalate, dibutyl tin oxide or titanium tetrachloride or tetra($C_3$—$C_4$)alkoxide. Also preferably the reaction is carried out above the melting point of the oxamide reactant (172—73°) to permit carrying out same without an extraneous reaction solvent. Thus most

desirably the reaction is carried out between about 175° and about 230°, and even more desirably at a temperature of at least about 185°. The propionic acid esters used in that reaction and preparations thereof are described in U.S. Patents 3,330,850 issued 2 May 1972 and 3,364,250 issued 16 January 1968 to M. Dexter et al. Similar esters containing only one or more than two methylene groups in the alkylene radical linking the hydroxyphenyl ring and carbonyloxy radical therein can be prepared as described by V. V. Ershov et al. In Izv. Akad. Nauk. SSSR, Ser. Khim *7*, 1301 (1965). N,N' - bis(2 - hydroxyethyl)oxamide can be prepared as described by A. P. Phillips in J. Amer. Chem. Soc. *73*, 5557 (1951) and W. H. Rauscher in J. Amer. Chem. Soc. *70*, 438 (1948), i.e., by reacting ethanolamine with dimethyl or diethyl oxalate.

Alternatively, BPEO can be made by reacting N,N' - bis(2 - hydroxyethyl)oxamide with 3 - [3,5 - di - t - butyl - 4 - hydroxyphenyl]propionic acid, which can be prepared from the aforesaid esters by conventional hydrolysis, or with the anhydride of that acid. In another preparation of BPEO, that same acid can be converted to a corresponding acid halide by reaction with $SOCl_2$ or $SOBr_2$ in a suitable solvent (e.g. hexane) and then reacted with N,N' - bis(2 - hydroxyethyl)oxamide.

Compounds of this invention in which $R^1$ and/or $R^2$ are other than t-butyl can be made by analogous procedures using differently alkylated phenols. Compounds in which X is other than ethylene can be made by analogous procedures in which the N,N' - bis(2 - hydroxyethyl)oxamide is replaced with a different N,N' - bis(hydroxyhydrocarbyl)oxamide in which each hydrocarbyl radical is X as defined herein. Such oxamides can be made by reacting dimethyl or diethyl oxalate with the appropriate aminophenol, cycloalkanolamine or alkanolamine.

In another preparation of compounds of this invention, a suitably-alkylated hydroxyphenyl-alkanoic acid is converted to its chloride and then reacted with an appropriate nitro-alcohol to obtain the corresponding nitro-hydrocarbyl ester which is reduced to the corresponding amine and then reacted with oxalyl chloride.

The organic materials which can be stabilized by compounds of this invention include polyolefins which can be homopolymers of unsubstituted olefinic hydrocarbons such as, e.g. ethylene, propylene, 1-butylene, 1,3-butadiene and styrene, homopolymers of substituted olefinic hydrocarbons such as, e.g. vinyl halides such as vinyl chloride and esters such as acetate, vinyl alcohols, acrylonitrile and methacrylonitrile, or copolymers of two or more of such substituted and/or unsubstituted olefinic hydrocarbons. Also included are condensation polymers such as, e.g. polyalkylene oxides, polyurethanes, polycarbonates, polyesters such as polyethylene terephthalates and polyamides such as polyhexamethylene adipamide and polycaprolactam. Other organic materials which can be stabilized by this invention include lubricating oils, e.g. of the aliphatic ester type such as di(2-ethylhexyl)azelate and pentaerythritol tetracaprolate, animal and vegetable derived oils such as linseed oil, fat, tallow, lard, peanut oil, cod liver oil, castor oil, palm oil, corn oil and cottonseed oil, fatty acids such as soaps, and other hydrocarbon materials such as gasoline, mineral oil, fuel oil, drying oil, cutting fluids and waxes.

In general, one or a mixture of the compounds of this invention is employed in a concentration between about 0.005% and about 5% of the organic material to be stabilized, although more or less can be used if desired. In many such organic materials, including particularly polyolefins, it is typically preferred to use such compounds in a concentration between about 0.01% and about 2%. In polymers of unsubstituted olefinic hydrocarbons such as, e.g. polyethylene or a copolymer of ethylene and propylene, it is generally most advantageous to use between about 0.5% and about 1%. For best results, such compounds should be generally dispersed substantially uniformly throughout the material to be stabilized. Any suitable dispersion technique (e.g. melt-blending) can be used. If desired, and in some cases very advantageously, such compounds can be employed in combination with other stabilizers, e.g. dilauryl or distearyl β-thiodipropionate, antiozonants, thermal stabilizers, ultraviolet light absorbers and/or with coloring materials, dyes, pigments, metal chelating agents, etc.

The following examples are illustrative only and do not imply any limitations on the scope of this invention.

Example I

3-(3,5-di-t-butyl-4-hydroxyphenyl)propionic acid (5.6 g; 0.02 mole) and thionyl chloride (5 g; 0.04 mole) are refluxed in 50 ml heptane for 20 hrs. The resulting solution is concentrated, N,N' - bis(2 - hydroxyethyl)oxamide (1.8 g; 0.01 mole) and 50 ml dry toluene are added and refluxing is continued another 24 hrs. Cooling precipitates a white solid which, when recrystallized from ethanol, has a m.p. of 134—36° and analytical data (infrared and nuclear magnetic resonance spectra) consistent with that expected for N,N' - bis - [2 - [3 - (3,5 - di - t - butyl - 4 - hydroxyphenyl)-propionyloxy]ethyl]oxamide (BPEO). Yield was 4.8 g (69%). Found: C, 68.16%; H, 8.96%; N, 4.38% (theoretical: C, 68.93%; H, 8.68%; N, 4.02%).

Example II

When Example I is repeated except that 2.6 g (0.01 mole) of o,o' - bis - hydroxy - oxanilide is the oxamide reactant, there is produced 5.5 g (69% yield) of a solid having a m.p. of 187—91° and analytical data consistent with that expected for o,o' - bis[3 - (3,5 - di - t - butyl - 4 - hydroxyphenyl) - propionyloxy] - oxanilide (hereinafter OBPO).

Example III

When Example I is repeated except that 2.0 g (0.01 mole) of N,N' - bis(2 - hydroxypropyl)-oxamide is the oxamide reactant, there is produced 6.0 g (83% yield) of a solid having a m.p. of 124—28° and analytical data consistent with that expected for N,N' - bis[2 - [3 - (3,5 - di - t - butyl - 4 - hydroxyphenyl)propionyloxy]propyl]oxamide (hereinafter B2PO).

Example IV

3-(3,5-di-t-butyl-4-hydroxyphenyl)propionic acid (5.6 g; 0.02 mole) and thionyl chloride (5 g; 0.04 mole) are refluxed in 50 ml heptane for 5 hrs. The resulting solution is concentrated and m-nitrophenol (2.8 g; 0.02 mole) and 50 ml dry toluene are added. After refluxing another 20 hrs, the solvent is evaporated and the residue is recrystallized from 100 ml ethanol. 4.0 g. of the resulting solid is reduced in 100 ml methanol in the presence of 5% Pd on C in $H_2$. When uptake ceases, the catalyst is separated by filtration and the solvent is evaporated. The residue is treated with oxalyl chloride (0.63 g; 0.05 mole) in 75 ml dry toluene. The solution is refluxed for 5 hrs and then concentrated. The residue is recrystallized from 25 ml toluene, providing a solid having a m.p. of 113—17° and analytical data consistent with that expected for m,m' - bis[3 - (3,5 - di - t - butyl - 4 - hydroxyphenyl)propionyloxy]oxanilide (hereinafter MBPO). Yield was 2.1 g (53%).

Example V

When Example I is repeated except that 2.0 g (0.01 mole) of N,N' - bis(3 - hydroxypropyl)-oxamide is the oxamide reactant, there is produced 6.7 g (92% yield) of a solid having a m.p. of 119—22° and analytical data consistent with that expected for N,N' - bis[3 - [3 - (3,5 - di - t - butyl - 4 - hydroxyphenyl)propionyloxy]propyl]oxamide (hereinafter B3PO).

Example VI

When Example IV is repeated except that 2.8 g (0.02 mole) of p-nitrophenol is substituted for the m-nitrophenol, there is produced 2.2 g (55% yield) of a solid having a m.p. of 184—88° and analytical data consistent with that expected for p,p' - bis[3 - (3,5 - di - t - butyl - 4 - hydroxyphenyl)-propionyloxy] - oxanilide (hereinafter PBPO).

Example VII

When Example I is repeated except that 2.6 g (0.01 mole) of N,N' - bis(5 - hydroxyamyl)-oxamide is the oxamide reactant, there is produced 4.0 g (51% yield) of a solid having a m.p. of 132—35° and analytical data consistent with that expected for N,N' - bis[5 - [3 - (3,5 - di - t - butyl - 4 - hydroxyphenyl)propionyloxy]amyl]oxamide (hereinafter BPAO).

Example VIII

When Example I is repeated except that 2.2 g (0.01 mole) of N,N' - bis(2 - hydroxy - 1,1 - dimethylethyl)oxamide is the oxamide reactant, there is produced 3.6 g (48% yield) of a solid having a m.p. of 156—59° and analytical data consistent with that expected for N,N' - bis[2 - [3 - (3,5 - di - t - butyl - 4 - hydroxyphenyl)propionyloxy] - 1,1 - dimethylethyl]oxamide (hereinafter BPDEO).

Examples IX—XIV describe tests carried out to evaluate the compounds of this invention as stabilizers of organic materials against oxidative degradation. Since organic materials normally oxidize slowly at ambient temperatures, even in the absence of antioxidant compounds, the testing of such compounds must be conducted at elevated temperatures to obtain results within a reasonable time. Hence the following tests were conducted at 120—140°. All polymers employed in these tests were unstabilized except as specifically noted herein.

Example IX

Compounds prepared in Examples I—VIII and other stabilizers were incorporated in a concentration of 0.35% in a wire and cable grade copolymer of propylene and 1—15% ethylene. In the case of each compound, a 40 g sample was made by fusing a dry-blended mixture of that compound and the copolymer resin in a Brabender mixer at 180°, preheating without mixing for 3 min. and then mixing for 5 min. at a rotor speed of 70 rpm. A 0.6 mm-thick sheet was prepared from each composition by compression molding in a picture frame mold at 180° using molding cycles of 3 min. under no added pressure and then 2 min. at 3400 atm. ($3.4 \times 10^8$ $N.m^{-2}$) followed by quench-cooling in water. A 0.9 mm-thick sandwich was prepared by laminating a 4 cm×10 cm piece of 40 mesh/cm Cu screen between 2 pieces of the sheet in a 180° mold using molding cycles of 2 min. with no added pressure followed by 1 min. at 2040 atm. ($2.1 \times 10^8$ $N\ m^{-2}$) and then quench-cooling in water. Each sandwich was aged at 140° in a circulating hot air oven equipped with a rotating sample holder until obvious physical failure evidenced by cracking, crazing and/or powdering, with the following results:

TABLE A

| Compound employed (0.35%) | Hours to failure |
|---|---|
| OBPO (Ex. II) | 1550 |
| BPEO (Ex. I) | 1500 |
| MBPO (Ex. IV) | 1375 |
| B2PO (Ex. III) | 1300 |
| B3PO (Ex. V) | 1125 |
| PBPO (Ex. VI) | 1025 |
| BPAO (Ex. VII) | 888 |
| Goodrite 3125[1] | 625 |
| Irganox 1024[2] | 525 |
| BPDEO (Ex. VIII) | 500 |
| BPO[3] | 412 |
| BPEO thio-oxamide analog[4] | 72 |
| BEO[5] | 48 |
| BPEO oxalate isomer[6] | 48 |
| None | 24 |

[1]B.F. Goodrich Co. product 2,2′,2″ - tris[3 - (3,5 - di - t - butyl - 4 - hydroxyphenyl)propionyloxyethyl]isocyanurate.

[2]Ciba-Geigy Corp. product N,N′ - bis[3 - (3,5 - di - t - butyl - 4 - hydroxyphenyl)propionyl]-hydrazine. (Irganox is a Trade Mark).

[3]N,N′ - bis[3 - (3,5 - di - t - butyl - 4 - hydroxyphenyl)propyl]oxamide.

[4]N,N′ - bis[2 - [3 - (3,5 - di - t - butyl - 4 - hydroxyphenyl)propionyloxy]ethyl]thio-oxamide.

[5]N,N′ - bis[2 - (3,5 - di - t - butyl - 4 - hydroxybenzyloxy)ethyl]oxamide.

[6]Bis[2 - [3 - (3,5 - di - t - butyl - 4 - hydroxyphenyl)propionamido]ethyl]oxalate.

Example X

Various concentrations of BPEO (Ex. I) were evaluated for stabilization of communications cable primary insulation in a comparison with a standard concentration of a commercially employed combination of Irganox 1024 and OABH. In a first set of tests simulating aging in unfilled (air-core) cable, Cu screen-containing samples of a propylene/ethylene copolymer were prepared and aged as described in Example IX. In a second set simulating aging in filled cable, duplicate sandwiches were dipped in a standard petroleum jelly cable filler compound (Witco (Trade Mark) 13C) for 1 min. at 115—20°, aged at 70° for 10 days, wiped clean and then aged as described hereinbefore but at 120°. Results were as follows:

TABLE B

| Compound(s) employed | Hours to failure<br>Undipped samples | <br>Dipped samples |
|---|---|---|
| 0.25% Irganox 1024 and 0.1% OABH | 340 | 370 |
| 0.05% BPEO | 140 | 125 |
| 0.10% BPEO | 360 | 270 |
| 0.15% BPEO | 700 | 450 |
| 0.20% BPEO | 1090 | 630 |
| 0.25% BPEO | 1310 | 750 |
| 0.30% BPEO | 1480 | 980 |
| 0.35% BPEO | 1660 | 980 |
| 0.40% BPEO | 1760 | 1120 |
| 0.45% BPEO | 1860 | 1200 |
| 0.50% BPEO | 1900 | 1360 |

Example XI

Compounds prepared in Examples I—VIII and other stabilizers were incorporated in a concentration of 0.25% together with 0.1% OABH is a propylene/ethylene copolymer, and sandwiches were made of the resulting compositions as described in Example IX. The effectiveness of each compound was evaluated as described for "undipped" samples in Example X (140° hot air oven) with the following results:

TABLE C

| Compound employed (0.25%) together with 0.1% OABH | Hours to failure |
|---|---|
| OBPO (Ex. II) | 1032 |
| Irganox 1010[1] | 972 |
| MBPO (Ex. IV) | 864 |
| Goodrite 3125 | 831 |
| BPEO (Ex. I) | 814 |
| B2PO (Ex. III) | 792 |
| B3PO (Ex. V) | 684 |
| PBPO (Ex. VI) | 684 |
| BPDEO (Ex. VIII) | 546 |
| BPAO (Ex. VII) | 480 |
| Irganox 1024 | 430 |
| BPEO oxalate isomer[2] | 72 |
| BPEO thio-oxamide analog[3] | 48 |
| BEO[4] | 48 |

[1]Ciba-Geigy Corp. product tetrakis[methylene - 3 - (3,5 - di - t - butyl - 4 - hydroxyphenyl)-propionyloxy]methane.
[2, 3, 4]See Table A.

Example XII

BPEO (Ex. I) was evaluated for stabilization of high density polyethylene in comparison with other compounds effective for that purpose. Samples for these tests were prepared using pellets of a conventional wire and cable grade high density polyethylene (duPont Alathon (Trade Mark) 5496) in a Brabender mixer at 180°. After addition of 0.1% of an antioxidant compound and 0.1% of a metal deactivator (0.2% when the same compound is used as both) based on the polymer weight, the molten polymer was mixed for 5 min. at a rotor speed of 70 rpm. Cu screen-containing sandwiches were prepared as described in Example IX except that 32 mesh/cm Cu screen was used. Aging was carried out as in Example X except that both dipped and undipped samples were aged at 120°. Results were as follows:

TABLE D

| Antioxidant compound (0.1%) | Metal deactivator (0.1%) | Hours to failure Undipped samples | Hours to failure Dipped samples |
|---|---|---|---|
| BPEO | BPEO | 2500 | 1700 |
| Irganox 1024 | Irganox 1024 | 2320 | 1700 |
| Irganox 1010 | Irganox 1010 | 840 | 670 |
| Irganox 1010 | BPEO | 2530 | 1190 |
| Irganox 1024 | BPEO | 2410 | 1400 |
| Irganox 1010 | Irganox 1024 | 2340 | 1120 |
| Irganox 1010 | OABH | 1800 | 1200 |
| BPEO | OABH | 1450 | 1010 |
| Irganox 1024 | OABH | 1310 | 990 |

Example XIII

Compounds prepared in Examples I—VIII and other compounds having antioxidant properties were incorporated in a conventional general purpose molding-grade block copolymer of approximately 90% propylene and 10% ethylene. In these tests, 40 g. samples were prepared by dry-mixing the powdered copolymer with 0.2% of the antioxidant compound based on the copolymer weight, preheating the mixture for 3 min. in a Bradender mixer at 180° and then mixing for 5 min. at a rotor speed of 70 rpm. A 0.9 mm-thick sheet was prepared from each composition by compression molding at 180° in a picture frame mold. Molding cycles were 3 min. at no added pressure and then 2 min. at 3400 atm. ($3.4 \times 10^8 N.m^{-2}$) followed by quench-cooling in water. A 2.5 cm×5.5 cm sample was cut from each molding sheet and aged in a circulating hot air oven at 140° with the following results:

TABLE E

| Antioxidant compound (0.2%) | Hours to failure |
|---|---|
| OBPO (Ex. II) | 1740 |
| MBPO (Ex. IV) | 1728 |
| BPEO (Ex. I) | 1692 |
| Irganox 1010 | 1640 |
| B3PO (Ex. V) | 1608 |
| B2PO (Ex. III) | 1584 |
| Goodrite 3125 | 1536 |
| BPAO (Ex. VII) | 1464 |
| BPEO thio-oxamide analog[1] | 1320 |
| BPDEO (Ex. VIII) | 1176 |
| PBPO (Ex. VI) | 1152 |
| BPEO glycine isomer[2] | 1152 |
| Irganox 1035[3] | 1104 |
| BPEO dihydrizide variation[4] | 984 |
| Irganox 1024 | 912 |
| BPEO isomer homolog[5] | 864 |
| BPEO oxalate isomer[6] | 96 |
| None | 24 |

[1,6]See Table A.
[2]N,N′ - oxalylbis[glycine[3 - (3,5 - di - t - butyl - 4 - hydroxyphenyl)propyl]ester].
[3]Ciba-Geigy Corp. product bis[2 - [3 - (3,5 - di - t - butyl - 4 - hydroxyphenyl)propionyloxy]ethyl]-sulfide.
[4]N,N′′′′ - bis[2 - [3 - (3,5 - di - t - butyl - 4 - hydroxyphenyl)propionyloxy]ethyl]oxalyl dihydrazide.
[5]N,N′ - oxalylbis[β - alanine[3 - (3,5 - di - t - butyl - 4 - hydroxyphenyl)propyl]ester].

Example XIV

Compounds prepared in Examples I—VIII were incorporated in a conventional general purpose molding grade homopolymer of propylene (Exxon (Trade Mark) E-115). Tests were carried out using the compounds in two ways, i.e., as the sole antioxidant in a concentration of 0.2%, and as an antioxidant in a concentration of 0.1% together with 0.25% of antioxidant synergist dilaurylthiodipropionate. All concentrations were based on the weight of polymer employed. Samples were prepared by combining the homopolymer and antioxidant compound(s) in a Brabender mixer, heating at 180° without mixing for 3 min. and then with mixing for 5 min. at a rotor speed of 50 rpm. A 0.9 mm-thick sheet was prepared from each composition by compression molding at 180° in a picture frame mold with molding cycles of 3 min. at no added pressure, 2 min. at 4080 atm. ($4.1 \times 10^8$ $N.m^{-2}$) and 3—4 min. cooling in the mold under pressure. 2.5 cm×5.5 cm samples cut from the resulting sheets were aged in a circulating hot air oven at 140° with the following results:

TABLE F

| Antioxidant compound | Hours to failure<br>0.2%-<br>No synergist | <br>0.1%+0.25%<br>Synergist included |
|---|---|---|
| BPAO (Ex. VII) | 792 | 1110[1] |
| B2PO (Ex. III) | 480 | 650 |
| B3PO (Ex. V) | 430 | 815 |
| BPDEO (Ex. VIII) | 185 | 835 |
| BPEO (Ex. I) | 175 | 250 |
| PBPO (Ex. VI) | 120 | 290 |
| MBPO (Ex. IV) | 120 | 215 |
| OBPO (Ex. II) | 50 | 290 |
| None | 24 | — |

[1]Still running with no sign of imminent failure.

From the foregoing data, it is apparent that compounds of this invention are advantageously useful in stabilization of organic materials such as polyolefins against oxidative deterioration in the presence of a metal which catalyzes such deterioration, and also advantageously useful for stabilization of organic materials in the absence of such a metal. It is particularly apparent that in the presence of

such a metal, compounds of this invention provide very significant stabilization advantages without use of any other stabilizer and that such advantages are surprisingly great, especially in view of the much less attractive results provided by alternative use of other compounds of only modestly different structure.

## Claims

1. A compound characterized by the formula

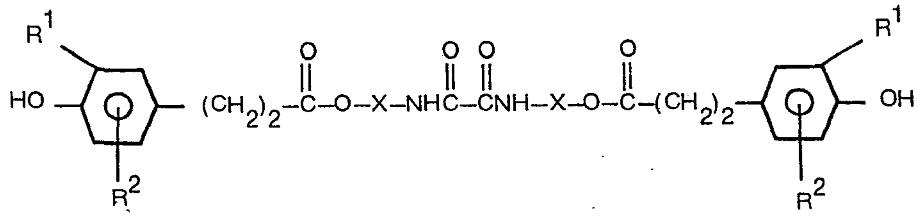

in which each $R^1$ independently is tertiary alkyl having up to 8 carbon atoms with the tertiary carbon atom directly linked to the phenolic ring on which that $R^1$ is a substituent, each $R^2$ independently is H or alkyl having up to 8 carbon atoms, and each X independently is a divalent hydrocarbon radical containing up to 12 carbon atoms and having from 1 to 10 carbon atoms forming the chain linking the adjacent

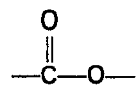 and 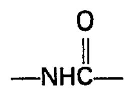

radicals in said compound.

2. A compound of claim 1 characterized in that each $R^1$ is the same alkyl and X is alkylene or phenylene.

3. A compound of claim 2 characterized in that X is alkylene containing not more than 1 carbon atom more than the number of carbon atoms in said chain.

4. A compound of claim 1 characterized in that $R^1$ is tertiary butyl and each $R^2$ is tertiary butyl ortho to the hydroxy radical on the phenolic ring on which that $R^2$ is a substituent.

5. A compound of claim 4 characterized in that X is alkylene or phenylene.

6. A compound of claim 5 characterized in that the X is alkylene containing not more than 1 carbon atom more than the number of carbon atoms in said chain.

7. A compound of claim 6 characterized in that X contains 2 or 3 carbon atoms.

8. A compound of claim 7 characterized in that the X is ethylene.

9. A compound of claim 5 characterized in that X is meta-phenylene.

10. A compound of claim 5 characterized in that X is orthophenylene.

11. A method for stabilizing organic material against oxidative deterioration, characterized by incorporating in organic material normally subject to said deterioration a stabilizing amount of a compound as defined in claim 1.

12. Method of claim 11 characterized in that each $R^1$ is tertiary butyl, each $R^2$ is tertiary butyl ortho to the hydroxy radical on the phenolic ring on which that $R^2$ is a substituent and X is phenylene or alkylene.

13. Method of claim 12 wherein said organic material is a polymer of one or more olefinically unsaturated monomers.

14. Method of claim 10 characterized in that the polymer is polyethylene or a copolymer of ethylene and propylene consisting essentially of propylene and at least 0.5% ethylene.

15. A composition of matter characterized by organic material normally subject to oxidative deterioration and a stabilizing amount of a compound as defined in claim 1.

16. Composition of claim 15 in which the compound is characterised as in claim 4, 5, 7, 9 or 10.

17. Composition of claim 16 characterized in that said organic material is a polymer of one or more olefinically unsaturated monomers.

18. Composition of claim 17 characterized in that the polymer is polyethylene or a copolymer of ethylene and propylene consisting essentially of propylene and at least 0.5% ethylene.

**Patentansprüche**

1. Verbindung, gekennzeichnet durch die Formel

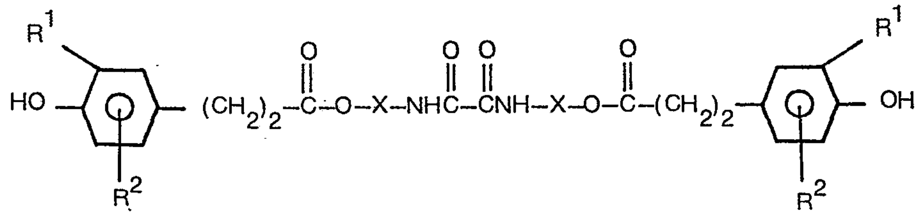

worin

jede Gruppe $R^1$, unabhängig von der anderen, eine tertiäre Alkylgruppe mit bis zu 8 Kohlenstoffatomen bedeutet, bei der das tertiäre Kohlenstoffatom direkt an den Phenolring gebunden ist, an dem die betreffende Gruppe $R^1$ ein Substituent ist,

jede Gruppe $R^2$, unabhängig von der anderen, H oder eine Alkylgruppe mit bis zu 8 Kohlenstoffatomen bedeutet und

jede Gruppe X, unabhängig von der anderen, eine bis zu 12 Kohlenstoffatome enthaltende, zweiwertige Kohlenwasserstoffgruppe bedeutet, die 1 bis 10 Kohlenstoffatome aufweist, aus denen die Kette gebildet wird, die in der Verbindung die benachbarten Gruppen

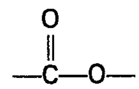 und 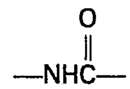

verbindet.

2. Verbindung nach Anspruch 1, dadurch gekennzeichnet, daß jede Gruppe $R^1$ die gleiche Alkylgruppe bedeutet und X eine Alkylen- oder Phenylgruppe ist.

3. Verbindung nach Anspruch 2, dadurch gekennzeichnet, daß X eine Alkylengruppe ist, die nicht mehr als 1 Kohlenstoff mehr enthält als der Anzahl der Kohlenstoffatome in der Kette entspricht.

4. Verbindung nach Anspruch 1, dadurch gekennzeichnet, daß $R^1$ eine tertiäre Butylgruppe ist und jede Gruppe $R^2$ eine tertiäre Butylgruppe bedeutet, die sich in Ortho-Stellung zu der Hydrolylgruppe an dem Phenolring, an dem die betreffende Gruppe $R^2$ ein Substituent ist, befindet.

5. Verbindung nach Anspruch 4, dadurch gekennzeichnet, daß X eine Alkylen- oder Phenylengrupe ist.

6. Verbindung nach Anspruch 5, dadurch gekennzeichnet, daß X eine Alkylengruppe ist, die nicht mehr als 1 Kohlenstoffatom mehr enthält als der Anzahl der Kohlenstoffatome in der Kette entspricht.

7. Verbindung nach Anspruch 6, dadurch gekennzeichnet, daß X 2 oder 3 Kohlenstoffatome enthält.

8. Verbindung nach Asnpruch 7, dadurch gekennzeichnet, daß X eine Ethylengruppe ist.

9. Verbindung nach Anspruch 5, dadurch gekennzeichnet, daß X eine meta-Phenylengruppe ist.

10. Verbindung nach Anspruch 5, dadurch gekennzeichnet, daß X eine ortho-Phenylengruppe ist.

11. Verfahren zum Stabilisieren von organischem Material gegenüber oxidativer Zersetzung, dadurch gekennzeichnet, daß in organisches Material, das normalerweise der oxidativen Zersetzung ausgesetzt ist, eine stabilisierende Menge einer Verbindung nach Anspruch 1 eingemischt wird.

12. Verfahren nach Anspruch 11, dadurch gekennzeichnet, daß jede Gruppe $R^1$ eine tertiäre Butylgruppe ist, jede Gruppe $R^2$ eine tertiäre Butylgruppe bedeutet, die sich in ortho-Stellung zu der Hydroxylgruppe an dem Phenolring, an dem die betreffende Gruppe $R^2$ ein Substituent ist, befindet, und X eine Phenylen- oder Alkylengruppe ist.

13. Verfahren nach Anspruch 12, bei dem das organische Material ein Polymer von einem oder mehr olefinisch ungesättigten Monomer(en) ist.

14. Verfahren nach Anspruch 13, dadurch gekennzeichnet, daß das Polymer Polyethylene oder ein Copolymer von Ethylene und Propylen, das im wesentlichen aus Propylen und mindestens 0,5% Ethylen besteht, ist.

15. Materialzusammensetzung, gekennzeichnet durch organisches Material, das normalerweise oxidativer Zersetzung ausgesetzt ist, und eine stabilisierende Menge einer Verbindung nach Anspruch 1.

16. Zusammensetzung nach Anspruch 15, worin die Verbindung eine Verbindung nach Anspruch 4, 5, 7, 9 oder 10 ist.

17. Zusammensetzung nach Anspruch 16, dadurch gekennzeichnet, daß das organische Material ein Polymer von einem oder mehr olefinisch ungesättigten Monomer(en) ist.

18. Zusammensetzung nach Anspruch 17, dadurch gekennzeichnet, daß das Polymer Polyethylen oder ein Copolymer von Ethylen und Propylen, das im wesentlichen aus Propylen und mindestens 0,5 % Ethylen besteht, ist.

## Revendications

1. Un composé charactérisé par la formule

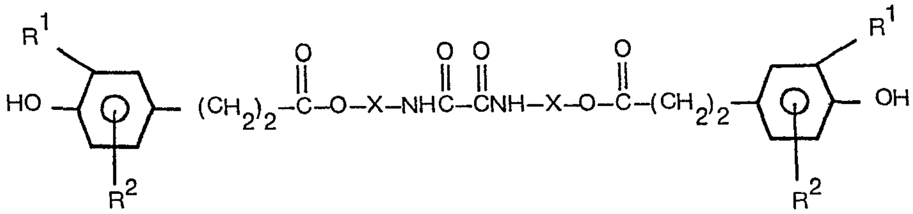

dans laquelle chaque $R^1$ est indépendamment un radical alcoyle tertiare ayant jusqu'à 8 atomes de carbone avec l'atome de carbone tertiaire directement relié au cycle phénolique sur lequel ce $R^1$ est un substituant, chaque $R^2$ est indépendamment H ou un radical alcoyle ayant jusqu'à 8 atomes de carbone, et chaque X est indépendamment un radical hydrocarboné divalent contenant jusqu'à 12 atomes de carbone, à partir de 1 jusqu'à 10 atomes de carbone formant la chaîne de liaison entre les radicaux adjacents

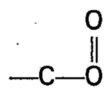 et 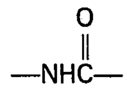

dans ledit composé.

2. Un composé selon la revendication 1, caractérisé en ce que chaque $R^1$ est le même radical alcoyle et X est un radical alcoylène ou phénylène.

3. Un composé selon la revendication 2, caractérisé en ce que X est un radical alcoylène contenant pas plus que 1 atome de carbone que le nombre d'atomes de carbone contenus dans ladite chaîne.

4. Composé selon la revendication 1, caractérisé en ce que $R^1$ est un butyle tertiaire et chaque $R^2$ est un butyle tertiaire en position ortho par rapport au radical hydroxy sur le cycle phénolique sur lequel ce $R^2$ est un substituant.

5. Composé selon la revendication 4, caractérisé en ce que X est un radical alcoylène ou phénylène.

6. Un composé selon la revendication 5, caractérisé en ce que X est un radical alcoylène contenant pas plus que 1 atome de carbone que le nombre d'atomes de carbone dans ladite chaîne.

7. Un composé selon la revendication 6, caractérisé en ce que X contient 2 ou 3 atomes de carbone.

8. Un composé selon la revendication 7, caractérisé en ce que X est l'éthylène.

9. Un composé selon la revendication 5, caractérisé en ce que X est le radical méta-phénylène.

10. Un composé selon la revendication 5, caractérisé en ce que X est le radical orthophénylène.

11. Un procédé pour la stabilisation de matériaux organiques contre les déteriorations oxydantes, caractérisé par l'incorporation dans le matiériau organique normalement soumis à ladite détérioration d'une quantité stabilisante d'un composé ayant la formule comme définie dans la revendication 1.

12. Procédé selon la revendication 11, caractérisé en ce que chaque $R^1$ est un butyle tertiaire, chaque $R^2$ est un butyle tertiaire en position ortho par rapport au radical hydroxy du cycle phénolique sur lequel ce $R^2$ est un substituant et X est un radical phénylène ou alcoylène.

13. Procédé selon la revendication 12 dans lequel ledit matériau organique est un polymère d'un ou plusieurs monomères à insaturation oléfinique.

14. Procédé selon la revendication 10, caractérisé en ce que le polymère est le polyéthylène ou un copolymère d'éthylène et propylène consistant essentiellement en propylène et au moins 0,5% d'éthylène.

15. Composition de matière caractérisée par le matériau organique normalement soumis à la détérioration oxydante et une quantité stabilisante d'un composé comme défini dans la revendication 1.

16. Composition selon la revendication 15 dans laquelle le composé est caractérisé comme défini dans les revendications 4, 5, 7, 9 ou 10.

17. Composition selon la revendication 16, caractérisée en ce que ledit matériau organique est un polymère de un ou plusieurs monomères à insaturation oléfinique.

18. Composition selon la revendication 17, caractérisée en ce que le polymère est un polyéthylène ou un copolymète d'éthylène et de propylene consistant essentiellement en propylene et au moins 0.5% d'éthylène.